# EUROPÄISCHE PATENTSCHRIFT

(11) **EP 0 832 551 B1**
(45) Veröffentlichungstag und Bekanntmachung des Hinweises auf die Patenterteilung: **05.12.2001**
(21) Anmeldenummer: 97115705.2
(22) Anmeldetag: 10.09.1997
(51) Int. Cl.: A01D 75/18

(54) **Einzugszusammenbau**
Feeding assembly
Ensemble d'alimentation

(30) Priorität: 27.09.1996 US 722597
(43) Veröffentlichungstag der Anmeldung: 01.04.1998
(73) Patentinhaber: DEERE & COMPANY, Moline, Illinois 61265-8098 (US)
(72) Erfinder: Augie, Patrick, Ottumwa, Iowa 52501 (US)
(74) Vertreter: Magin, Ludwig Bernhard

(56) Entgegenhaltungen:
- EP-A- 0 666 021
- DE-A- 3 019 166
- GB-A- 2 024 590
- GB-A- 2 103 762
- US-A- 4 193 248
- US-A- 4 433 528

## Beschreibung

Die Erfindung betrifft einen Einzugszusammenbau insbesondere einer Erntemaschine mit wenigstens zwei parallel zueinander verlaufenden, nicht-magnetisierbaren und gegensinnig rotierenden Rollen, die zwischen sich einen Gutstrom führen, und mit einem Sensor eines Metalldetektors, der im Innenraum einer der Rollen angeordnet ist, wobei die andere Rolle auf einer Tragachse drehbar gelagert und gegenüber der einen Rolle abstandsveränderlich ist.

Die US-A-4,193,248 offenbart einen Feldhäcksler mit einem Einzugszusammenbau, der insgesamt vier in einem Viereck angeordnete Einzugswalzen aufweist. Die Einzugswalzen dienen dazu, von einem Feld aufgenommenes Erntegut zu einer Matte zu verdichten und einer Häckseltrommel zuzuführen, von der es in kleine Stücke gehäckselt wird. Zum Schutz insbesondere der Häckseltrommel, ist in der vorderen unteren Einzugswalze ein Sensor eines Metalldetektors angeordnet, der ein Magnetfeld erzeugt, das zu der darüber befindlichen Einzugswalze gerichtet wird und somit eine evtl. zwischen ihnen befindliche Gutmatte durchdringt. Diese beiden Einzugswalzen sind aus nicht magnetisierbarem Stahl gebildet, damit das Magnetfeld nicht beeinflußt wird. Die obenliegende Einzugswalze ist drehbar auf einer Stahlachse gelagert, die von schwenkbaren Armen getragen und somit in bezug auf die untere und den Sensor des Metalldetektors enthaltende Einzugswalze vertikal beweglich ist. Befindet sich in der Gutmatte ein eisenhaltiger Gegenstand, wird das Magnetfeld gestört und der Metalldetektor bringt die Einzugswalzen zum Stehen.

Diesem Einzugszusammenbau haftet der Nachteil an, daß der Metalldetektor zuweilen aktiviert wird und somit den Antrieb der Einzugswalzen abschaltet, obwohl sich in der das Magnetfeld passierenden Gutmatte kein eisenhaltiges Metall befindet.

Das der Erfindung zugrunde liegende Problem wird darin gesehen, daß der Metalldetektor irrtümlich anspricht.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann die Tragachse der dem Sensor gegenüberliegenden Rolle nicht zu einer Beeinflussung des Magnetfelds führen. Als Materialien kommen insbesondere austenitischer Stahl, Aluminium und Messing infrage. Bei dem zu fördernden Gut kann es sich neben landwirtschaftlichem als Futter dienenden Erntegut auch um Tabak, um Holz für die Kompostierung oder dergleichen handeln.

Da Tragachsen aus einem nicht magnetisierbaren Material regelmäßig nicht so fest sind und eine nicht so harte Oberfläche aufweisen, sind zur Vermeidung von Verschleiß auf der Tragachse gehärtete Lagerinnenringe zur Aufnahme von Wälzlagern vorgesehen, so daß an der Tragachse selbst kein Verschleiß entsteht.

Eine Anpassung des Spaltes zwischen den betreffenden Rollen an die Dicke der Gutmatte ist möglich, wenn eine der Rollen, und zwar insbesondere die, die nicht mit dem Sensor versehen ist, beweglich ist, nämlich radial beweglich, was z. B. über deren Lagerung auf schwenkbaren Radialarmen erreicht wird.

Hinsichtlich der Festigkeit und Härte einerseits und der Vermeidung von Einflüssen auf das Magnetfeld andererseits, erscheint die Verwendung von austenitischem Stahl für die Tragachse als optimal.

Wenn die Rolle auf einer hohlen Antriebswelle aufgebaut ist und von der Tragachse getragen wird und von dieser lösbar ist, können diese getrennt voneinander ein- und ausgebaut werden, was für Wartungsarbeiten von Vorteil ist.

In der Zeichnung ist ein nachfolgend näher beschriebenes Ausführungsbeispiel der Erfindung dargestellt. Es zeigt:
- Fig. 1: einen Einzugszusammenbau mit Rollen und einer Häckseltrommel in halbschematischer Darstellung und in Seitenansicht,
- Fig. 2: obere Rollen im horizontalen Teilschnitt im Bereich einer Tragachse und
- Fig. 3: ein Diagramm, das Aussagen über die Sensitivität eines Metalldetektors macht.

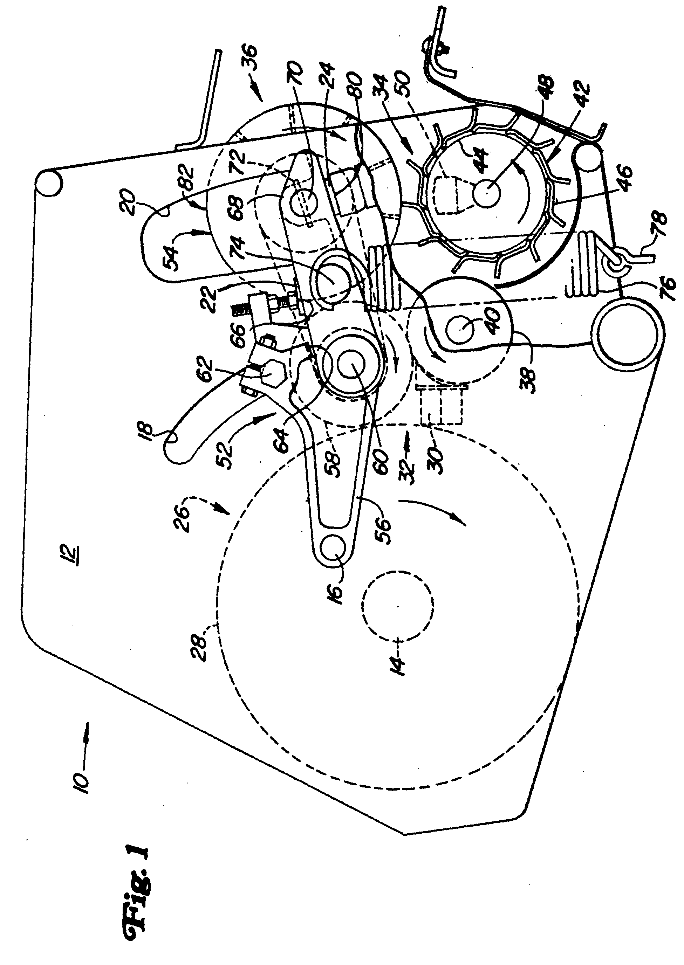

In Figur 1 ist ein Einzugszusammenbau 10 eines im übrigen nicht gezeigten Feldhäckslers gezeigt. Der Einzugszusammenbau 10 enthält ein Paar linke und rechte sich gegenüberstehende, aufrechte Seitenwände 12, die einen Abstand zueinander aufweisen, im allgemeinen gleich ausgebildet sind und als Teile dienen, die Zuführ- und Schneidkomponenten enthalten und tragen. Die Seitenwände 12 sind entsprechend verstärkt und auf einem nicht gezeigten Feldhäckslerrahmen mittels Teilrahmen abgestützt, auf die hier nicht eingegangen wird. Jede Seitenwand 12 enthält eine Häckseltrommellagerung 14, die nur schematisch angedeutet ist, ein starr angebrachtes Lager 16 im nachfolgenden näher beschriebener Rollen, das nach vorne und nach oben einen Abstand zu dem Häckseltrommellager 14 einhält, einen Schlitz 18, der Bewegungsfreiheit für wenigstens eine der Rollen gewährt und nach oben und vorne gegenüber dem Lager 16 einen Abstand aufweist und sich auf einem Kreisbogen um dieses erstreckt, und einem größeren Schlitz 20 von ungleichförmiger Gestalt, der Freiraum für die Rollen bietet und sich vor dem Schlitz 18 befindet. Ein erster oder rückwärtiger Anschlag 22 für eine Bewegung nach unten ist zwischen den Schlitzen 18 und 20 an der Außenseite jeder Seitenwand 12 angebracht, und ein zweiter oder vorderer Anschlag 24 ist an den Außenseiten jeder Seitenwand 12 an entsprechenden Stellen unterhalb der Schlitze 20 vorgesehen.

Eine Häckseltrommel 26 ist zwischen einem rückwärtigen unteren Abschnitt der sich gegenüberliegenden Seitenwände 12 vorgesehen und gelenkig mit der Häckseltrommellagerung 14 verbunden. Die Häckseltrommel 26 ist herkömmlich ausgebildet und enthält eine rund-zylindrische Trommel zum Tragen einer Vielzahl von Messern, wobei nur der von den Schneidkanten der Messer beschriebene Kreis 28 in der Zeichnung dargestellt ist.

Eine ortsfeste Gegenschneide 30 erstreckt sich zwischen den Seitenwänden 12 und wird von diesen an Stellen getragen, die sich an der Vorderseite der Häckseltrommel 26 befinden, und die Gegenschneide 30 ist so positioniert, daß die Schneidkanten der Messer an einer rückwärtigen Fläche der Gegenschneide 30 entlangstreifen, um so das Gut in Stücke bestimmter Länge zu schneiden, wenn es über die Gegenschneide 30 gelangt.

Das Gut wird der Gegenschneide 30 mittels eines Zuführförderers 32 zugeführt, der sich zwischen den beiden gegenüberliegenden Seitenwänden 12 und unmittelbar vor, bzw. stromaufwärts der Häckseltrommel 26 befindet. Der Zuführförderer 32 enthält insbesondere einen ortsfesten unteren Förderer 34 und einen gegenüberliegenden oberen und nachgiebig schwenkenden Förderer 36. Der untere Förderer 34 weist eine untere rückwärtige Rolle 38 auf, die sich nahe der Gegenschneide 30 befindet und um eine Achse 40 drehbar ist. Der untere Förderer 34 enthält auch eine untere vordere Rolle 42 mit einer rund-zylindrischen Trommel 44, die eine Vielzahl von Falzen 46 oder Rippen trägt und zur Drehbewegung auf einer Achse 48 gelagert ist. Ein Sensor 50 eines im übrigen nicht gezeigten Metalldetektorsystems ist auf die Achse 48 montiert und kann betrieben werden, um ein Magnetfeld zu erzeugen, das derart ausgerichtet wird, daß Magnetflußlinien erzeugt werden, die so verlaufen, daß sie im wesentlichen vertikal durch eine über die Rolle 42 bewegte Gutmatte hindurchtreten. Um diese Erstellung eines Magnetfelds zu ermöglichen, sind die Trommeln 44 und die Falzen 46 aus einem nicht magnetisierbaren Material gebildet, z. B. aus austenitischem Edelstahl.

Der obere Förderer 36 enthält rückwärtige und vordere Einzugswalzenzusammenbauten 52 bzw. 54. Der rückwärtige Einzugswalzenzusammenbau 52 besteht aus einem Paar sich gegenüberliegender Radialarme 56, die sich längs der Außenseiten der Seitenwände 12 nach vorne erstrecken und deren rückwärtige Endabschnitte schwenkbeweglich um das Lager 16 gehalten sind. Eine obere rückwärtige Einzugswalze 58 ist mittels einer Achse 60 an vordere Endabschnitte der Radialarme 56 angebracht, wobei sich die Achse 60 zwischen den Seitenwänden 12 erstreckt und sich gegenüberliegende Endabschnitte aufweist, die sich jeweils durch die bogenförmigen Schlitze 18 erstrecken. Die Radialarme 56 sind über eine Stange 62 miteinander verbunden, damit sie sich als eine Einheit bewegen. Die Stange 62 erstreckt sich zwischen den Seitenwänden 12 und weist gegenüberliegende Endabschnitte auf, die sich jeweils durch die bogenförmigen Schlitze 18 erstrecken und mit den Radialarmen 56 verbunden sind. An den vorderen Endbereich jedes Radialarms 56 ist ein einstellbarer Anschlag 64 einstückig angeformt, der zur Anlage an den rückwärtigen Anschlag 22 bestimmt ist. Ein Paar oberer, vorderer Tragarme 68, an die in einer Verbindungsstelle 72 sich gegenüberliegende Endabschnitte einer Tragachse 70 angeschraubt oder mit Schrauben befestigt sind, ist um gegenüberliegende Endbereiche der rückwärtigen oberen Achse 60 schwenkbar gelagert. Die Tragachse 70 erstreckt sich zwischen den Seitenwänden 12 und besitzt gegenüberliegende Endabschnitte, die sich durch den vorderen Schlitz 20 erstrecken. Der Schwenkanschlag 64 jedes Radialarms 56 ist so angeordnet, daß er an einer oberen Oberfläche des nahegelegenen vorderen Tragarms 68 anschlägt, um somit die relative Schwenkbewegung der Radialarme 56 und der Tragarme 68 zueinander zu begrenzen. An jeden Tragarm 68 ist auf dem halben Weg zwischen dessen gegenüberliegenden Endbereichen ein Zapfen 74 zur Aufnahme einer Feder einstückig ausgebildet, der sich von dem diesem nach außen erstreckt. An jeden Zapfen 74 ist ein oberes Hakenende einer Spiralzugfeder 76 angeschlossen, während das untere Hakenende mit einer einstellbaren Zugöse 78 verbunden ist. Auf diese Weise wird auf die Tragarme 68 eine nach unten gerichtete Vorspannung ausgeübt, wobei letztere an einer vorderen unteren Fläche jeweils einen Dämpfungsblock 80 für die Anlage an dem Anschlag 24 aufweisen.

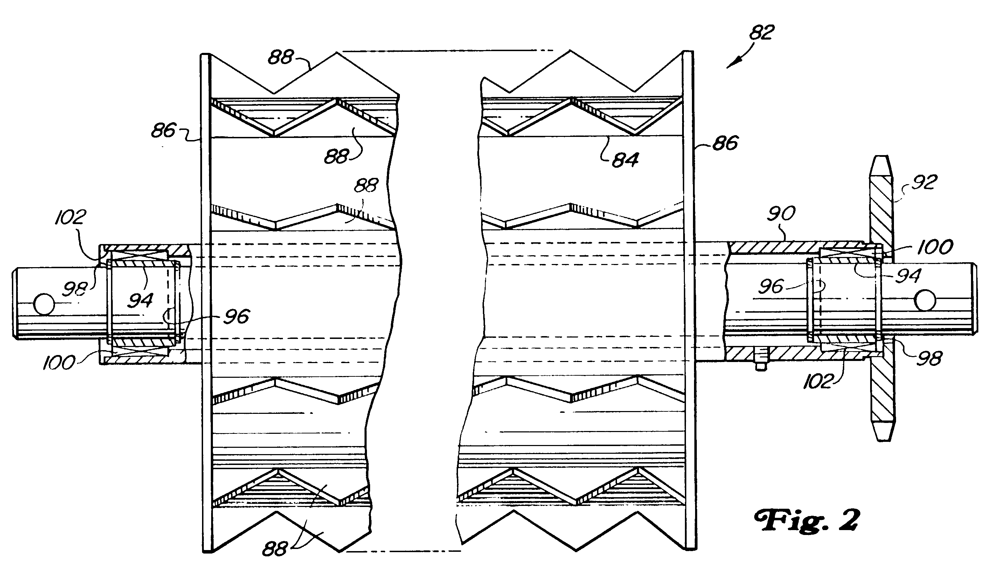

Eine aus austenitischem Stahl gebildete Rolle 82 ist in einer nachfolgend beschriebenen Weise um die Tragachse 70 schwenkbar montiert. Es wird jetzt auch Bezug auf Figur 2 genommen, in der zu sehen ist, daß die Rolle 82 eine zylindrische Trommel 84 aufweist, deren gegenüberliegende Enden mittels kreisförmiger Platten 86 verschlossen sind. Die Platten 86 haben einen größeren Durchmesser als die Trommel 84 und zwischen ihnen erstreckt sich eine Vielzahl gezahnter Stege 88 oder Rippen, die an unterschiedlichen und voneinander beabstandeten Winkelstellungen an der Trommel 84 befestigt sind und sich von dieser radial erstrecken. Soweit die Beschreibung bisher gediehen ist, handelt es sich um eine herkömmliche Bauweise.

Eine hohle Antriebswelle 90, die sich durch die Platten 86 erstreckt und mit diesen verbunden ist, ist im montierten Zustand koaxial um die Tragachse 70 angeordnet. Ein Antriebszahnrad 92 ist an dem rechten Endabschnitt der Antriebswelle 90 angebracht. Die Tatsache, daß die Tragachse 70 aus austenitischem Stahl gebildet ist, ist von Bedeutung. Da dieses Material jedoch nicht die erforderliche Härte besitzt, um als Innenring eines Traglagers dienen zu können, wird ein gehärteter Lagerinnenring 94 auf jeden Endabschnitt der Tragachse 70 aufgesetzt und mittels eines inneren und eines äußeren Sicherungsrings 96 und 98 lagegesichert. Die Sicherungsringe 96, 98 sind in innen- bzw. außenliegenden Nuten in der Tragachse 70 an entsprechenden Endbereichen des Lagerinnenrings 94 aufgenommen. Zum Betrieb mit dem Lagerinnenring 94 ist ein Wälzlager 100, insbesondere ein Nadellager, vorgesehen, wobei die Torrington Company of Torrington, Connecticut, USA, ein Lieferant solcher Lager ist. Jedes Wälzlager 100 enthält eine Vielzahl von Lagernadeln, die auf dem Außenumfang des Lagerinnenrings 94 anrollen, mit dem zusammen sie benutzt werden. Die Wälzlager 100 enthalten zudem eine Schale oder einen Lageraußenring, dessen Außenumfangsfläche in einer ringförmigen Lagerkammer 102 aufgenommen wird, die in jedem Endbereich der hohlen Antriebswelle 90 gebildet ist. Es wird daraus ersichtlich, daß die Antriebswelle 90 zur freien Drehbewegung um die Tragachse 70 gelagert ist.

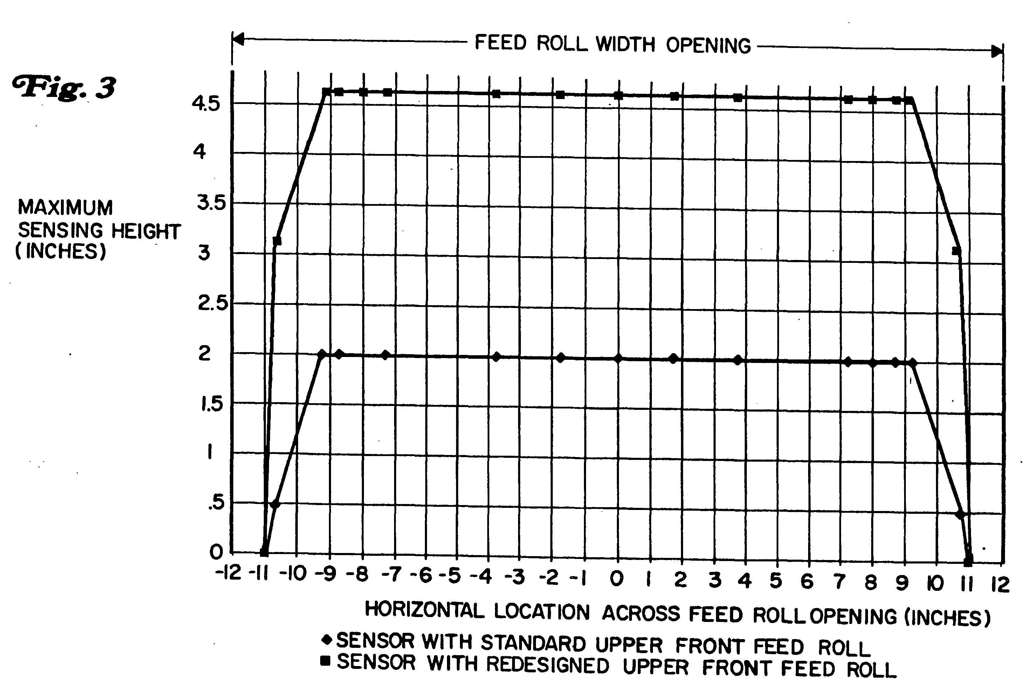

Im weiteren wird auf Figur 3 bezug genommen, in der ein Diagramm gezeigt ist, das einen Vergleich darstellt. Der Vergleich zeigt die Erhöhung der Empfindlichkeit, die durch den Wechsel des Materials der oberen vorderen Rolle 82, bzw. deren Tragachse 70 von einem magnetisierbaren Stahl zu einem nichtmagnetisierbaren Stahl erreicht wird. Die Empfindlichkeit wird an der Oberseite der unteren vorderen Rolle 42 gemessen und wird auf der linken Seite des Diagramms mit Null beginnend und sich erhöhend angezeigt. Meßwerte entlang der Breite der oberen und unteren vorderen Rolle 82 und 42 sind an der Unterseite des Diagramms aufgetragen. Dabei bezeichnet Null eine Stelle auf dem halben Weg zwischen gegenüberliegenden Enden der Rollen 82, 42, und Datenpunkte links und rechts der mittigen Stelle sind durch negative und positive Ziffern gekennzeichnet, die sich jeweils ausgehend von der mittigen Stelle erhöhen.

Ein erster Testlauf wurde mit einer oberen vorderen Rolle 82 durchgeführt, die auf einer Tragachse 70 aus magnetisierbarem Stahl getragen wurde. Es wurde dabei herausgefunden, daß zur Vermeidung eines irrtümlichen Ansprechens des Metalldetektors dessen Empfindlichkeit so eingestellt werden mußte, daß sich das erzeugte Magnetfeld tatsächlich nur bis ca. 5,08 cm (2") über die untere Rolle 42 erstreckte. Die in diesem Testlauf ermittelten Meßwerte sind in dem Diagramm mit rautenförmigen Symbolen eingetragen.

Ein zweiter Datensatz wurde durch den Austausch der Tragachse 70 gegen eine Tragachse 70 für die vordere obere Rolle 82 aus nicht magnetisierbarem Stahl ermittelt. Die Empfindlichkeit des Metalldetektors wurde dann auf einen Wert erhöht, bei dem die maximale Empfindlichkeitshöhe ca. 10,78 cm (4 5/8 ") beträgt. Obwohl diese Empfindlichkeitshöhe mehr als das Doppelte der mit einer Standardtragachse erreichbaren beträgt, sprach der Metalldetektor bei dieser Empfindlichkeit nicht irrtümlich an. Die in diesem Testlauf erhaltenen Meßwerte sind mittels quadratischer Symbole in das Diagramm eingetragen. Es ist damit erkennbar, daß durch den Gebrauch einer nicht magnetisierbaren Tragachse 70 für die vordere obere Rolle 82 im Gegensatz zu einer herkömmlichen magnetisierbaren Tragachse eine bemerkenswerte Erhöhung der Empfindlichkeit erreicht werden kann, wie dies die Meßwerte belegen.

Es wird angenommen, daß die Funktion des Zuführförderers 32 aus der obigen Beschreibung klar ist. Es ist wohl überflüssig zu erwähnen, daß die vorderen und rückwärtigen, oberen und unteren Rollen 82, 42 und 58, 38 dazu da sind, das geerntete Gut zu einer Matte zu verdichten, die über die Gegenschneide 30 verläuft und von den Messern, die einen Teil der Häckseltrommel 26 darstellen, in Stücke geschnitten wird. Abhängig von der Menge des Ernteguts, das an jeder beliebigen Stelle aufgenommen wird, wenn ein Feldhäcksler, der den Einzugszusammenbau 10 trägt, über das Feld fährt, werden die obere vordere und rückwärtige Rolle 82 und 58 angehoben bzw. abgesenkt, wie dies von dem Lager 16 ermöglicht wird. Der Sensor 50 in der unteren vorderen Rolle 42 erstellt ein ausgeglichenes Magnetfeld, das die über die Rolle 42 verlaufende Erntegutmatte durchquert. In dem Fall, daß in der Gutmatte eisenhaltiges Material entdeckt werden sollte, wird dieses das Gleichgewicht des Magnetfeldes stören, was bewirkt, daß die Steuerung des Metalldetektors aktiviert wird, um den Antrieb des Zuführförderers 32 so abzubremsen, daß er sofort seine Förderbewegung einstellt. Die Empfindlichkeit des Metalldetektors wird auf einem relativ hohen Wert erhalten, während irrtümliche Metallanzeigen ausgeschaltet oder zumindest minimiert werden, und zwar aufgrund der Tatsache, daß die Tragachse 70 der vorderen oberen Rolle 82 aus austenitischem oder nicht-magnetisierbarem Stahl besteht.

## Patentansprüche

1. Einzugszusammenbau (10) insbesondere einer Erntemaschine mit wenigstens zwei parallel zueinander verlaufenden, nicht-magnetisierbaren und gegensinnig rotierenden Rollen (82, 42), die zwischen sich einen Gutstrom führen, und mit einem Sensor (50) eines Metalldetektors, der im Innenraum einer der Rollen (82, 42) angeordnet ist, wobei die andere Rolle (82) auf einer Tragachse (70) drehbar gelagert und gegenüber der einen Rolle (42) abstandsveränderlich ist, **dadurch gekennzeichnet, daß** die Tragachse (70) aus nicht-magnetisierbarem Material gebildet ist.

2. Einzugszusammenbau nach Anspruch 1, **dadurch gekennzeichnet, daß** die Tragachse (70) zueinander beabstandete gehärtete Lagerinnenringe (94) trägt, auf denen Wälzkörper zur drehbaren Lagerung der Rolle (82) abrollen.

3. Einzugszusammenbau nach Anspruch 1 oder 2, **dadurch gekennzeichnet, daß** die Tragachse (70) endseitig auf vertikal beweglichen, insbesondere schwenkbaren, Radialarmen (56) gelagert ist.

4. Einzugszusammenbau nach einem oder mehreren der vorherigen Ansprüche, **dadurch gekennzeichnet, daß** die Tragachse (70) aus austenitischem Stahl besteht.

5. Einzugszusammenbau nach einem oder mehreren der vorherigen Ansprüche, **dadurch gekennzeichnet, daß** die Rolle (82) auf einer hohlen Antriebswelle (90) befestigt ist und sich die Tragachse (70) durch den Hohlraum der Antriebswelle (90) erstreckt und diese mittels als Nadellager ausgebildeten Wälzlagern (100) drehbar aufnimmt.

## Claims

1. A feed assembly (10) especially for a harvesting machine with at least two non-magnetic oppositely rotating rollers (82, 42) running parallel to one another and which guide a material flow therebetween, and with a sensor (50) of a metal detector, which is arranged in the interior of one of the rollers (82, 42), wherein the other roller (82) is mounted rotatably on a supporting axle (70) and its spacing from the one roller (42) can be adjusted, **characterized in that** the supporting axle (70) is made of non-magnetic material.

2. A feed assembly according to claim 1, **characterized in that** the supporting axle (70) carries mutually spaced, hardened inner bearing rings (94), on which rolling bodies roll to journal the roller (82) rotatably.

3. A feed assembly according to claim 1 or 2, **characterized in that** the supporting axle (70) is mounted at the ends on vertically movable, particularly pivoting, radial arms (56).

4. A feed assembly according to one or more of the preceding claims, **characterized in that** the supporting axle (70) consists of austenitic steel.

5. A feed assembly according to one or more of the preceding claims, **characterized in that** the roller (82) is fixed on a hollow drive shaft (90) and the supporting axle (70) extends through the hollow space of the drive shaft (90) and receives this by means of rolling bearings (100) in the form of needle bearings.

## Revendications

1. Dispositif de rentrage (10) notamment d'une moissonneuse, comportant au moins deux rouleaux (82,42) qui sont parallèles entre eux, ne sont pas aimantable et tournent en des sens opposés et guident entre eux un flux de matière, et comportant un capteur (50) d'un détecteur de métaux, qui est disposé dans l'espace intérieur de l'un des rouleaux (82,42), l'autre rouleau (82) étant monté de manière à pouvoir tourner sur un axe de support (70) et sa distance par rapport au premier rouleau (42) est variable, **caractérisé en ce que** l'axe de support (70) est réalisé en un matériau non aimantable.

2. Dispositif de rentrage selon la revendication 1, **caractérisé en ce que** l'axe de support (70) porte des bagues intérieures trempées de roulements (94), qui sont distantes l'une de l'autre et sur lesquelles roulent des corps de roulement pour supporter avec possibilité de rotation le rouleau (82).

3. Dispositif de rentrage selon la revendication 1 ou 2, **caractérisé en ce que** l'axe de support (70) est supporté, à ses extrémités, par des bras radiaux (56) qui se déplacent verticalement et notamment peuvent pivoter.

4. Dispositif de rentrage selon une ou plusieurs des revendications précédentes, **caractérisé en ce que** l'axe de support (70) est réalisé en acier austénitique.

5. Dispositif de rentrage selon une ou plusieurs des revendications précédentes, **caractérisé en ce que** le rouleau (82) est fixé sur un arbre d'entraînement creux (90), que l'axe de support (70) traverse la cavité de l'arbre d'entraînement (90) et reçoit ce dernier, de manière qu'il puisse tourner, au moyen de roulements (100), qui sont agencés sous la forme de roulements à aiguilles.
